# EUROPEAN PATENT APPLICATION

(11) **EP 4 309 942 A1**
(43) Date of publication of application: **24.01.2024**
(21) Application number: 22185587.7
(22) Date of filing: 18.07.2022
(51) Int. Cl.: B60K 35/00, G03G 15/00, H04N 1/00, G06T 19/00, G06F 3/00, G06V 20/20

(54) **AUGMENTED REALITY VISUAL DRIVER MANUAL ENRICHED WITH VEHICLE HUMAN MACHINE INTERFACE STATUS**

(71) Applicant: VOLVO TRUCK CORPORATION, 405 08 Göteborg (SE)
(72) Inventor: MAITRE, Julien, 3820 CHUZELLES (FR); QUIBRIAC, Yann, 69007 Lyon (FR)
(74) Representative: Valea AB

(57) **Abstract**

A method to determine a function and status of a human machine interface, HMI, of a vehicle is provided. The method includes receiving (1201), by a processor device of a computing system, a captured image including an HMI of the vehicle. The method includes determining (1203) a target HMI of the vehicle in the captured image. The method includes obtaining (1205) HMI information about the target HMI. The method includes determining (1207), from the vehicle, a current status of the target HMI. The method includes generating (1209) an augmented reality image having the HMI information and the current status. The method includes sending (1211) the augmented reality image to a display device of a user for display.

## Description

### TECHNICAL FIELD

The disclosure relates generally to augmented reality display of information. In particular aspects, the disclosure relates to an augmented reality visual driver manual enriched with vehicle human machine interface (HMI) status.

The disclosure can be applied in heavy-duty vehicles, such as trucks, buses, and construction equipment. Although the disclosure will be described with respect to a particular vehicle, the disclosure is not restricted to any particular vehicle.

### BACKGROUND

More and more functions and features are being added to vehicles. Many of these functions and features are HMIs such as buttons, knobs, free wheels, and the like. It can be difficult and at times frustrating for a vehicle driver of a vehicle, such as a new truck, to handle all the new functions and features, including which panel and their location on the panel in the new vehicle and their meaning in all situations.

For example, some HMIs are buttons having LED (light emitting diode) feedback, where the LED feedback is sometimes green, red, blinking, or blank (i.e., no feedback). The vehicle driver may not know if a red LED, for example, means a function is activated, unable to engage, disabled, etc.

### SUMMARY

According to an aspect of the disclosure, a method to determine a function and status of a human machine interface, HMI, of a vehicle is provided. The method includes receiving, by a processor device of a computing system, a captured image including an HMI of the vehicle. The method further includes determining a target HMI of the vehicle in the captured image. The method further includes obtaining HMI information about the target HMI. The method further includes determining, from the vehicle, a current status of the target HMI. The method further includes generating an augmented reality image with the HMI information and the current status. The method further includes sending the augmented reality image to a user device of a user for display. The first aspect of the disclosure may seek to provide the vehicle user with explanation of a target HMI with a current status of the target HMI. A technical benefit may include providing the current status of a target HMI with information about the target HMI. which results in an improvement or advantage of providing the vehicle user with relevant information about the target HMI and the current status of the target HMI.

In certain examples, the method includes: pairing the vehicle with a wireless device associated with the user; determining a vehicle identification of the vehicle; obtaining an augmented reality vehicle driver manual based on the vehicle identification determined; and opening the augmented reality vehicle driver manual on a wireless device associated with the user and paired with the vehicle. A technical benefit may include limiting downloads to downloads matching the vehicle identification which results in an improvement or advantage of reducing download bandwidth to only information associated with the vehicle identification.

In certain examples, the method includes: transmitting a request towards a vehicle manufacturer support for the augmented reality vehicle driver manual; and receiving the augmented reality vehicle driver manual responsive to the request, wherein obtaining HMI information of the vehicle comprises obtaining the HMI information from the augmented reality vehicle driver manual. A technical benefit may include limiting downloads to downloads matching the vehicle identification which results in an improvement or advantage of reducing download bandwidth to only information associated with the vehicle identification.

In certain examples, the method includes: pairing the vehicle with a wireless device associated with the user; authenticating the user; determining an identification of the vehicle; determining if the user is authorized to operate the vehicle; responsive to the user being authorized, obtaining an augmented reality vehicle driver manual based on the identification of the vehicle and opening the augmented reality vehicle driver manual on a wireless device associated with the user and paired with the vehicle, wherein obtaining HMI information of the vehicle comprises obtaining the HMI information from the augmented reality vehicle driver manual. A technical benefit may include limiting downloads to authenticated users which results in an improvement or advantage of reducing download bandwidth to only authenticated users and information limited to information associated with the vehicle identification.

In certain examples, the method includes: determining a target HMI of the vehicle in the captured image by determining which HMI of the vehicle that the user has selected.

In certain examples, the method includes determining the target HMI of the vehicle the user has selected by determining an HMI the user is pointing at or has touched.

In certain examples, the method includes: determining the target HMI of the vehicle the user has selected by: displaying, on a wireless device operated by the user, the captured image of a vehicle panel in which the user has pointed the wireless device at; obtaining an image of the HMI the user has selected on the captured image of the vehicle panel on the wireless device or selected on the vehicle panel; and based on the selection by the user, determining the target HMI.

In certain examples, the method includes: determining the current status of the target HMI by transmitting a status request to a controller of the vehicle to provide a status of the target HMI; and receiving a status request response from the controller with the current status of the target HMI.

In certain examples, the method includes: sending the augmented reality image for display by displaying on a vehicle display, the augmented reality image.

In certain examples, the method includes: sending the augmented reality image for display by displaying the augmented reality image on a display of a wireless device of the user.

In certain examples, the method includes: sending the augmented reality image for display by: initially displaying a description of a function associated with the target HMI for a pre-determined period of time; and after the pre-determined period of time has expired; displaying the augmented reality image.

In certain examples, the method includes: sending the augmented reality image for display by displaying a video describing one or more vehicle functions associated with the target HMI.

In certain examples, the method includes: responsive to the user operating the target HMI: transmitting a status request to a controller of the vehicle to provide a status of the target HMI; receiving a status request response from the controller with an updated current status of the target HMI; and displaying, on the display, the augmented reality image.

In certain examples, the method includes: determining the current status of the target HMI selected by: responsive to the vehicle being off: transmitting a command with an identification of the target HMI to the vehicle to turn on and provide the current status of the target HMI based on the identification of the target HMI; and receiving a response having the current status of the target HMI.

In certain examples, the method includes: tracking trends of what HMIs users are selecting; and periodically transmitting the trends to one of a vehicle manufacturer of the vehicle and a fleet manager associated with the vehicle.

According to another aspect of the disclosure, a vehicle including the processor device to perform the above methods is provided.

According to another aspect of the disclosure, a computer program having program code for performing, when executed by the processor device, the above methods is provided.

According to another aspect of the disclosure, a non-transitory computer-readable storage medium including instructions, which when executed by the processor device, cause the processor device to perform the above methods is provided.

According to another aspect of the disclosure, at least one computing system having the processor device configured to perform the above methods is provided.

Additional features and advantages are disclosed in the following description, claims, and drawings, and in part will be readily apparent therefrom to those skilled in the art or recognized by practicing the disclosure as described herein. There are also disclosed herein control units, computer programs, computer readable media, and computer program products associated with the above discussed technical effects and corresponding advantages.

### BRIEF DESCRIPTION OF THE DRAWINGS

With reference to the appended drawings, below follows a more detailed description of aspects of the disclosure cited as examples.
FIG. 1 is an exemplary view of a vehicle environment in which the inventive concepts operate according to one example.
FIG. 2 is a view of panels in the vehicle environment of FIG. 1 according to one example.
FIGs. 3-6 are exemplary views of human machine interfaces in which a vehicle operator may want further information and status of the human machine interfaces according to one example.
FIG. 7 is an exemplary view of a vehicle control system controlling an application on a vehicle user's wireless device to provide HMI information and HMI status according to one example.
FIG. 8 is an exemplary view of a wireless device receiving a stand-alone application that provides HMI information and status according to one example.
FIG 9. Is an exemplary view of a server based in a cloud controlling an application on a vehicle user's wireless device to provide HMI information and HMI status according to one example.
FIG. 10 is a schematic diagram of an exemplary computer system for implementing examples disclosed herein, according to one example.
FIGs. 11-17 are flowcharts illustrating various methods according to various aspects of the present disclosure.
FIGs. 18-20 illustrate examples of augmented reality images according to various aspects.
FIG. 21 is a flowchart illustrating a method according to an aspect of the present disclosure.
FIG. 22 is an illustrating of an initial display of HMI information according to an aspect of the present disclosure.
FIGs. 23-25 are flowcharts illustrating various methods according to various other aspects of the present disclosure.

### DETAILED DESCRIPTION

Aspects set forth below represent the necessary information to enable those skilled in the art to practice the disclosure and illustrate the best mode of practicing thereof.

According to various aspects of the disclosure, a vehicle user who desires to know what an HMI does and the status of the HMI can point at the HMI while pointing a user device at the HMI or touch an image of the HMI on the user device. The system determines the HMI being pointed at or touched on the user device, obtains information about the HMI and a current status of the HMI, generates an augmented image of the HMI having the current status of the HMI and the information about the HMI.

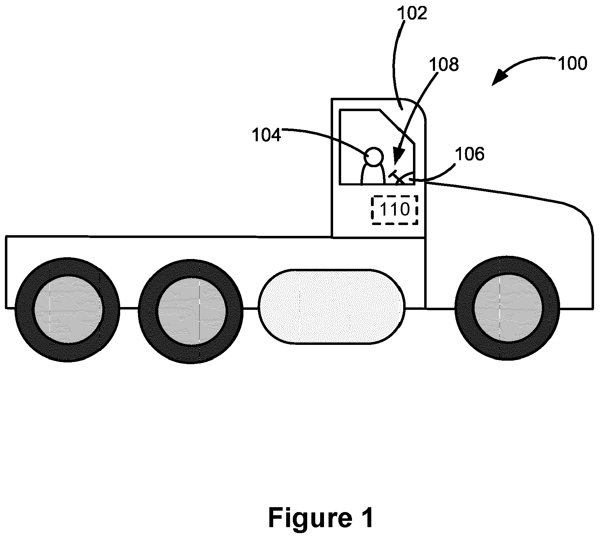

FIG. 1 is an exemplary vehicle in which the various aspects of the disclosure may be used according to one example. FIG. 1 illustrates a truck 102 having a cab 102 used by a vehicle user 104. The vehicle user 104 controls the vehicle using HMIs on the panels on the dashboard 106 and on the steering wheel 108. A vehicle control system 110 controls the vehicle 100 responsive to use of HMIs by the vehicle user 104 and provides a current status of an HMI as described herein.

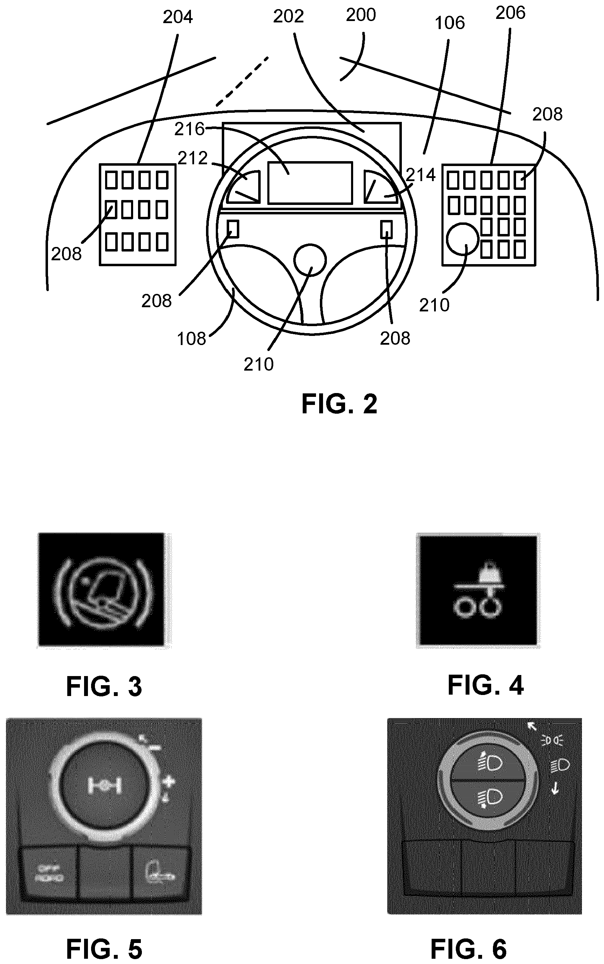

FIG. 2 is an exemplary dashboard 106 as a vehicle user 104 looks ahead towards the road 200. The dashboard 106 has panels 202, 204, and 206 upon which various HMIs 208, 210 are located. Additionally, panel 24 has gauges 212, 214 and display 216. While not shown, there may be panels having HMIs on the headershelf of the cab 102, on the rear of the cab 102 (e.g., the bunk), in a sleeping quarter on the vehicle 100, etc. Individual HMIs 208, 210 (i.e., HMIs not on any panel) may also be located on the steering wheel 108, on a center console, etc.

FIGs. 3-6 illustrate examples of HMIs.

FIG. 3 illustrates a hill start aid HMI that has two colors of feedback corresponding to "enable" and "active" where when active, provides a hill start brake that works even on steep inclines, with heavy loads, and keeps the vehicle from rolling.

FIG. 4 illustrates a load ratio HMI that can be pushed numerous times with each push changing the function. For example, the vehicle user can adjust downward force on the drive axle or lift the front tandem using the load ratio HMI.

FIG.5 illustrates a traction control HMI where turning the wheel changes the function behavior (e.g., changes traction control parameters). A vehicle user 14 may not understand the function change, especially the first time the traction control HMI is used by the vehicle user 14.

FIG. 6 illustrates a light control HMI that controls the headlight function as the wheel is turned.

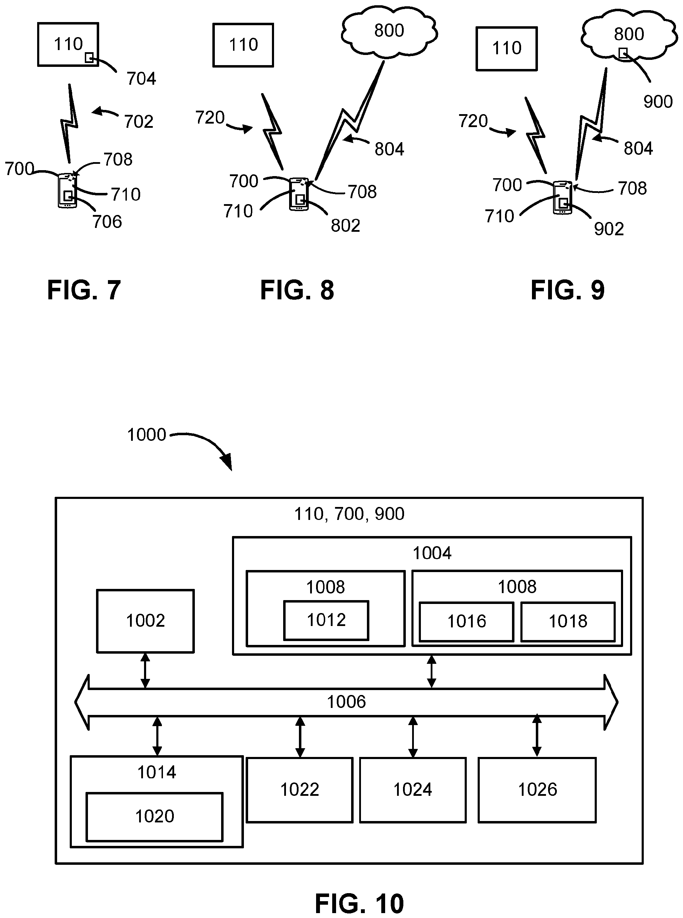

Turning to FIG. 7, in the various aspects described herein, a wireless device 700 of the vehicle user 104 is paired with the vehicle control system 110 via a wireless protocol 702, such as Bluetooth, 4G, 5G, etc.. The pairing allows the vehicle control system 110 and the wireless device to 700 communicate directly with each other. Pairing can also provide some security, as in some aspects, only paired wireless devices communicate with the vehicle control system 110. As described in further detail below, the wireless device 700 is used in at least determining a target HMI as explained below.

In some aspects, the vehicle control system 110 is configured to act as a server 704 to the wireless device 700 in determining the target HMI and provides a client program 706 on the wireless device 700 that is controlled by the vehicle control system 100. In these aspects, the vehicle control system 110 controls the camera 708 and display 710 of the wireless device 700 via the client program 704.

Turning to FIG. 8, in other aspects, the vehicle control system 110 is used to provide current status of the target HMI via the wireless protocol 702. The wireless device 700 in some of these aspects receives from the cloud 800 a stand-alone program 802 via a wireless protocol 804 where the stand-alone program is used by the vehicle user 104 to obtain information about HMIs in the vehicle.

Turning to FIG. 9, in yet other aspects, a server 900 distributed in the cloud 800 provides a client program 902 to the wireless device 700 that allows the server 900 to use the camera 708 and display 710 of the wireless device 700 to provide HMI information and current status about a target HMI as described below.

FIG. 10 is a schematic diagram of a computer system 1000 for implementing examples disclosed herein. The computer system 1000 can be the vehicle 100 of FIG. 7 or the wireless device 700 of FIG. 8 or the server 900. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein.

The computer system 1000 may comprise any computing or electronic device capable of including firmware, hardware, and/or executing software instructions to implement the functionality described herein. The computer system 1000 may be a user equipment 700 of the vehicle user 104 as illustrated in FIG. 8 or the vehicle 100 in a client-server arrangement with the user equipment 700 as illustrated in FIG. 7 or the cloud server 900 in a client-server arrangement with the user equipment 700. The computer system 1000 includes a processor device 1002 (may also be referred to as a control unit), a memory 1004, and a system bus 1006. The system bus 1006 provides an interface for system components including, but not limited to, the memory 1004 and the processor device 1002. The processor device 1002 may include any number of hardware components for conducting data or signal processing or for executing computer code stored in memory 1004. The processor device 1002 (i.e., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processor device 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processor device 1002. A basic input/output system (BIOS) 1012 may be stored in the non-volatile memory 1008 and can include the basic routines that help to transfer information between elements within the computing device 100.

The computing device 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

A number of modules can be stored in the storage device 1014 and in the volatile memory 1010, including an operating system 1016 and one or more program modules 1018, which may implement the functionality described herein in whole or in part. All or a portion of the examples disclosed herein may be implemented as a computer program product 1020 stored on a transitory or non-transitory computer-usable or computer-readable storage medium (i.e., single medium or multiple media), such as the storage device 1014, which includes complex programming instructions, such as complex computer-readable program code, to cause the processor device 1002 to carry out the steps described herein. Thus, the computer-readable program code can comprise software instructions for implementing the functionality of the examples described herein when executed by the processor device 1002. The processor device 1002 may serve as a controller, or control system, for the computing device 100 that is to implement the functionality described herein.

The computer system 1000 also may include an input device interface 1022 (e.g., input device interface and/or output device interface). The input device interface 1022 may be configured to receive input and selections to be communicated to the computer system 1000 when executing instructions, such as from a keyboard, mouse, touch-sensitive surface, etc. Such input devices may be connected to the processor device 1002 through the input device interface 1022 coupled to the system bus 1006 but can be connected through other interfaces such as a parallel port, an Institute of Electrical and Electronic Engineers (IEEE) 1394 serial port, a Universal Serial Bus (USB) port, an IR interface, and the like. The computer system 20 may include an output device interface 1024 configured to forward output, such as to a display, a video display unit (e.g., a liquid crystal display (LCD) or a cathode ray tube (CRT)). The computing device 1000 may also include a communications interface 1026 suitable for communicating with a network as appropriate or desired.

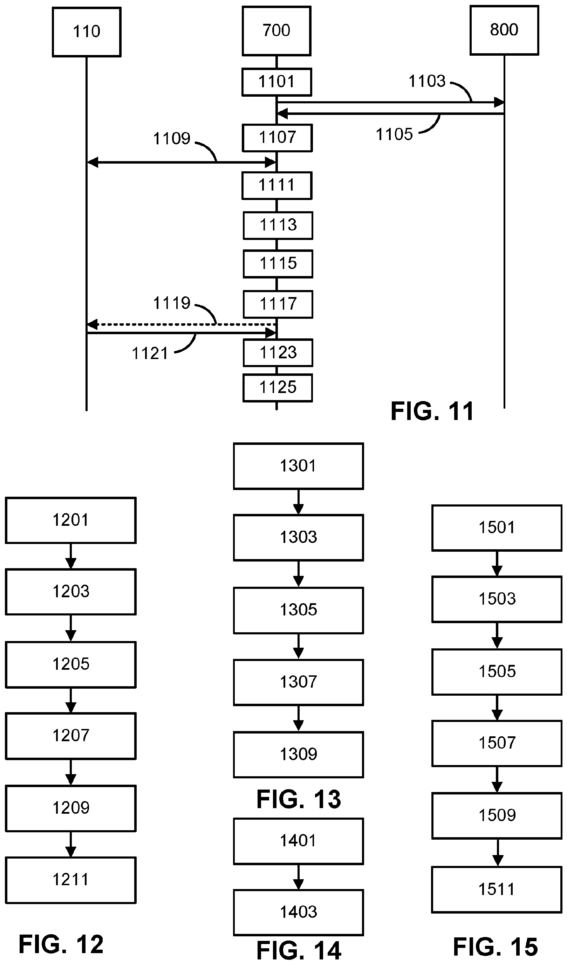

FIG. 12 illustrates a signaling diagram of an aspect of obtaining and using an application that provides the vehicle user 104 with HMI information about a target HMI and current status of the target HMI. The vehicle manufacturer may have the application be integrated with an augmented reality vehicle manual or be linked to an augmented reality vehicle driver manual. In operation 1101, the wireless device 700 obtains application information with a link to obtain the application. In operation 1102, the wireless device 700, at the direction of the vehicle user 104, transmits a request to the link for the application. The request can include a vehicle identification of the vehicle 100. In some aspects, the vehicle user 104, via the wireless device 700, must register to receive the application. The registration can require the vehicle user 104 to be authenticated before being provided a download link for the application.

In operation 1105, the wireless device 700 downloads the application and if separate, also downloads the augmented reality vehicle driver manual. The application downloaded depends on how the vehicle manufacturer set up the application. For example, if the application is set up in a client-server architecture as illustrated in FIG.7 and FIG. 9, the application is a client application (i.e., applications 706, 902 respectively). If the application is set up as a stand-alone application as illustrated in FIG. 8, then the application downloaded is a stand-alone application (i.e., application 802).

In operation 1107, the wireless device 700 installs the application that was downloaded. In some aspects, when the application is executed, the application checks to see if the wireless device 700 is paired with the vehicle 100. If the wireless device 700 is not paired, the application directs the vehicle user 104 to pair the wireless device 700 with the vehicle.

The pairing is illustrated in operation 1109. The pairing provides a trusted relationship between the wireless device 700 and the vehicle 100 (i.e., control system 110 of vehicle 100). Pairing, which is well-known, starts by placing the wireless device 700 within a meter of the vehicle 100, enabling Bluetooth, and setting the wireless device 700 to be in "discoverable mode." The vehicle 100 is selected on the wireless device from the list of discovered devices and a passkey is used to secure the link. Once the passkey has been entered, the wireless device 700 and the control system 110 of the vehicle will "talk" to each other and make sure that they share the same passkey. If both passkeys are the same, a trusted pair is automatically created and the devices can exchange data via Bluetooth.

In operation 1111, the vehicle user 104 executes the application to determine the function of one or more HMIs installed in the vehicle 100 and the current status of the one or more HMIs. If the application is a client application, the client application notifies the computing system 1000 of the vehicle 104 if the vehicle 104 is controlling the client application or the computing system 1000 of the server 900 in the cloud 800 if the server 900 is controlling the client application when the application is executed. If the application is a stand-alone application, then the computing system 1000 of the wireless device 700 controls the application via processor 1002. During operation 1111, the processor 1002 controlling the application directs the vehicle user 104 to point the camera of the wireless device 700 towards the HMI of interest to the vehicle user 104. The processor 1002 controlling the application directs the application to take an image of the area where the camera is being pointed at.

In operation 1113, the captured image is compared to pictures in the augmented reality vehicle driver manual using picture matching techniques. The picture matching the captured image in the augmented reality vehicle driver manual is displayed on the display 710 of the wireless device 700.

In operation 1115, the processor 1002 controlling the application directs the application to instruct the vehicle user 104 to either point to the HMI of interest while pointing the camera 708 to at the HMI of interest the user is pointing or touch the HMI of interest on the picture displayed on the display 710 of the wireless device. If the vehicle user 104 points at the HMI of interest, the processor 1002 controlling the application directs the application to obtain an image of the HMI the vehicle user 104 is pointing at.

In operation 1117, the processor 1002 controlling the application determines the target HMI (i.e., the HMI the vehicle user 104 is interested in). If the vehicle user 104 pointed at the target HMI, the processor 1002 controlling the application uses image matching techniques to determine the target HMI by comparing the HMI being pointed at in the captured image to images in the augmented reality vehicle driver manual to determine the HMI that matches the HMI in the captured image and identifies the matching HMI as the targe HMI. If the vehicle user 104 touched the display 700, the processor 1002 determines which HMI is at the location of the display 700 touched by the vehicle user 104. The HMI at the location of the display 700 touched by the vehicle user 104 is determined to be the target HMI.

In operation 1119, the processor 1002 controlling the application transmits a request to the vehicle control system 110 for current status of the target HMI. The request identifies the target HMI. In operation 1121, the vehicle control system 110 provides the current status of the target HMI. Operation 1119 is optional for the scenario where the processor 1002 controlling the application is part of the control system 110. In this scenario, the vehicle control system 110 provides the current status of the target HMI in operation 1121 without transmitting the request in operation 1119.

In operation 1123, the processor 1002 controlling the application determines HMI information for the target HMI in the augmented reality vehicle driver manual. This can be accomplished by searching for HMI information associated with the target HMI. In operation 1125, the processor 1002 controlling the application displays the target HMI information and the current status of the target HMI on display 710. Alternatively, or additionally, the target HMI information and current status of the target HMI can be displayed on display 216.

FIG. 12 illustrates a method to determine a function and status of a human machine interface, HMI, of a vehicle according to some aspects from the perspective of the wireless device 700. In the description that follows, while the processor 1002 could be a processor in the vehicle control system 110 in the environment illustrated in FIG. 7 or a processor in the server 900 in the environment illustrated in FIG. 9, the description will use the processor in the wireless device 700 in the environment illustrated in FIG. 8. Turning to FIG. 12, in block 1201, the processor 1002 of the computing system 1000 receives a captured image including an HMI of the vehicle. The captured image may be an image captured by a wireless device of the user as the user points the wireless device towards the HMI of interest (i.e., the target HMI).

In block 1203, the processor 1002 determines a target HMI of the vehicle in the captured image as described above. In block 1205, the processor 1002 obtains HMI information about the target HMI.

In some aspects, the HMI information in the captured image can be obtained from an augmented reality vehicle driver manual. FIG. 13 illustrates a method according to some aspects of obtaining the augmented reality vehicle driver manual. Turning to FIG. 13, in block 1301, the processor 1002 pairs the wireless device 700 to the vehicle 100, such as by Bluetooth pairing as previously described, if the wireless device 700 has not been paired with the vehicle 100.

In block 1303, the processor 1002 determines a vehicle identification of the vehicle 100. In the environment of FIG. 7, this block may not be performed as the vehicle already knows the vehicle identification. The processor 1002 may determine the vehicle identification by sending a request to the vehicle 100 for the vehicle identification. In block 1305, the processor 1002 obtains an augmented reality vehicle driver manual based on the vehicle identification determined as described above.

Fig. 14 illustrates a method according to some aspects of obtaining the augmented reality vehicle driver manual from a vehicle manufacturer support. Turning to FIG. 14, in block 1401, the processor 1002 transmits a request towards a vehicle manufacturer support for the augmented reality vehicle manual. The request may include the vehicle identification.

In block 1403, the processor 1002 receives the augmented reality vehicle driver manual responsive to the request.

Returning to FIG. 13, in block 1305, the processor 1002 opens the augmented reality vehicle driver manual on the wireless device 700 paired with the vehicle 100. In block 1307, the processor 1002 obtains the HMI information from the augmented reality vehicle driver manual (after the target HMI has been determined). For example, in some aspects, the processor 1002 performs a search in the augmented reality vehicle driver manual for the HMI information. The augmented reality vehicle driver manual may be set up with look-up tables in some aspects.

FIG. 15 illustrates a method according to some aspects where the user must first be authenticated before obtaining the augmented reality vehicle driver manual. Turning to FIG. 15, in block 1503, the processor 1002 authenticates the wireless device 700. There are numerous methods of authenticating users and many of them can be used to authenticate the wireless device 700. For example, a username and password can be used to authenticate the wireless device 700. For more secure authentications, two-factor authentication can be added to the username and password.

In block 1505, the processor 1002 determines an identification of the vehicle 100. In block 1507, the processor 1002 determines if the wireless device 700 is associated with a user authorized to operate the vehicle. For example, the processor 1002 can check the vehicle user 104 in a look-up table of authorized users to determine if the user is in the look-up table. If the user is in the look-up table, the vehicle user 104 user is authorized. The look-up table may be located in the vehicle 100 or in the cloud (e.g., cloud 800).

In block 1509, the processor 1002, responsive to the wireless device 700 being authorized, obtains an augmented reality vehicle driver manual based on the identification of the vehicle and opens the augmented reality vehicle driver manual on the wireless device 700 paired with the vehicle 100.

In block 1511, the processor 1002 obtains HMI information of the vehicle 100 by obtaining the HMI information from the augmented reality vehicle driver manual (after the target HMI has been determined) as previously described.

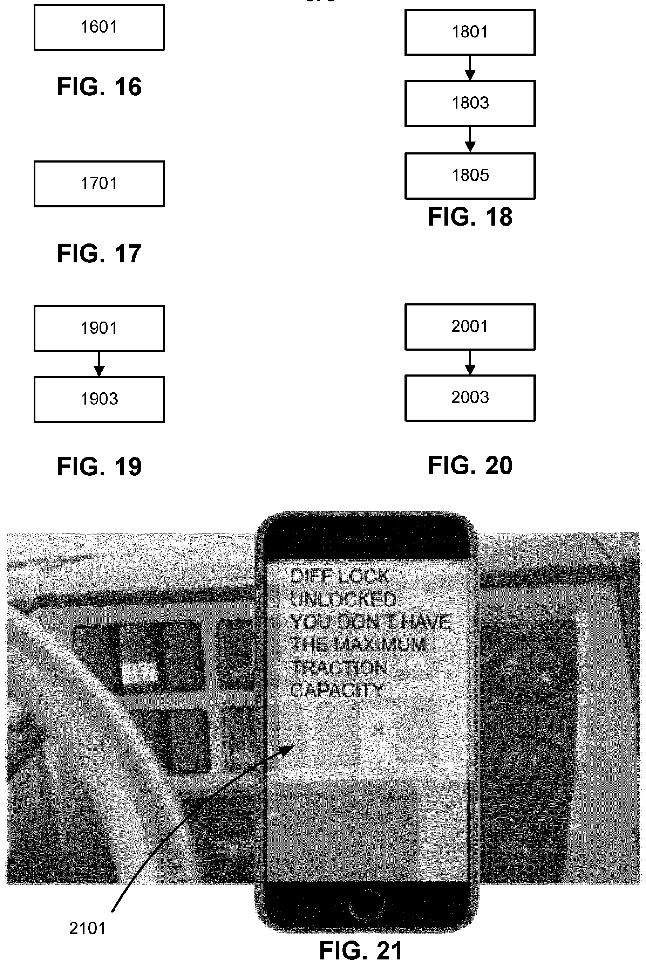

Determining the target HMI can be performed according to some aspects. FIGs. 16-18 illustrates a few methods of determining the target HMI. Turning to FIG. 16, in a first aspect of determining the target HMI, the processor 1002 in block 1601 determines the target HMI of the vehicle in the captured image by determining which HMI of the vehicle was selected by the user as previously described.

Turning to FIG. 17, in a second aspect, the processor 1002 in block 1701 determines the target HMI of the vehicle selected by determining an HMI pointed at touched by the vehicle user 104 as previously described.

Turning to FIG. 18, in a third aspect, the processor 1002 in block 1801 displays, on the wireless device 700 paired with the vehicle, the captured image of a vehicle panel at which the wireless device is pointed. In block 1803, the processor 1002 obtains an image of the HMI selected on the captured image of the vehicle panel on the wireless device or selected on the vehicle panel. In block 1805, the processor 1002 based on the selection, determines the target HMI.

FIG. 19 illustrates an aspect of determining the current status of the target HMI. Turning to FIG. 19, in block 1901, the processor 1002 transmits a status request to a controller of the vehicle to provide a status of the target HMI. Note that in the environment of FIG. 7 where the control system 110 controls the application 706, block 1901 is not performed.

In block 1903, the processor 1002 receives a status request response from the controller with the current status of the target HMI. In some aspects, the processor 1002 subscribes to status changes of HMIs.

In some situations, the vehicle 100 may be off. FIG. 20 illustrates an aspect of obtaining a current status of the HMI. Turning to FIG. 20, in block 2001, the processor 1002 transmits a command with an identification of the target HMI to the vehicle to turn on and provide the current status of the target HMI based on the identification of the target HMI. In block 2003, the controller 1002 receives a response having the current status of the target HMI.

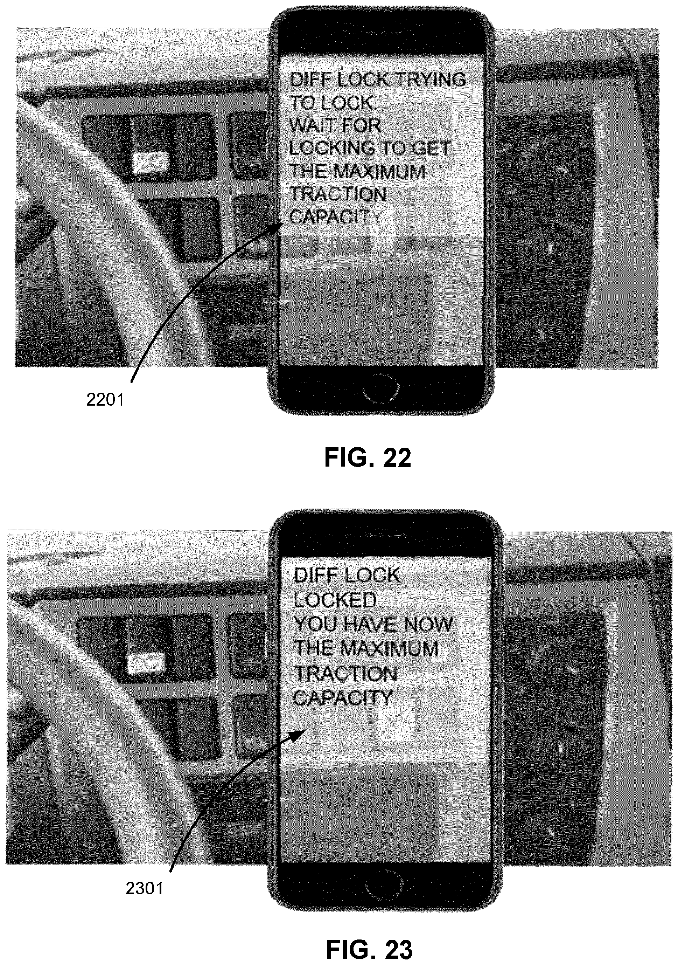

Returning to FIG. 12, in block 1209, the controller 1002 generates an augmented reality image having the HMI information and the current status. In block 1211, the controller 1002 sends the augmented reality image to a display device for display. For example, the display device may be the wireless device 700 having display 710 or the vehicle 100 having display 216. FIGs. 21-23 illustrate an augmented reality image displayed for a differential lock HMI. FIG. 21 illustrates the HMI information 2101 of the augmented reality image that may be displayed when the differential lock HMI is unlocked. FIG. 22 illustrates the HMI information 2201 of the augmented reality image that may be displayed when the differential lock is changing from an unlocked state to a locked state. FIG. 23 illustrates the HMI information 2301 of the augmented reality image that may be displayed when the differential lock is in a locked state. In one aspect, the augmented reality vehicle driver manual has the text displayed associated with HMI status. When the current status of a target HMI is obtained, the text that is displayed can be determined by finding the text associated with the current status of the HMI and displaying that text with the current status of the target HMI.

In some aspects, the processor 1002 sends the augmented reality image for display by sending the augmented reality image for displaying on a vehicle display 216.

In some other aspects, the processor 1002 sends the augmented reality image for display by sending the augmented reality image for displaying the augmented reality image on a display of the wireless device 700 of the user. The wireless device of the user in some aspects is the wireless device paired with the vehicle.

In yet other aspects, the processor 1002 sends the augmented reality image for display by sending the augmented reality image for displaying a video describing one or more vehicle functions associated with the target HMI.

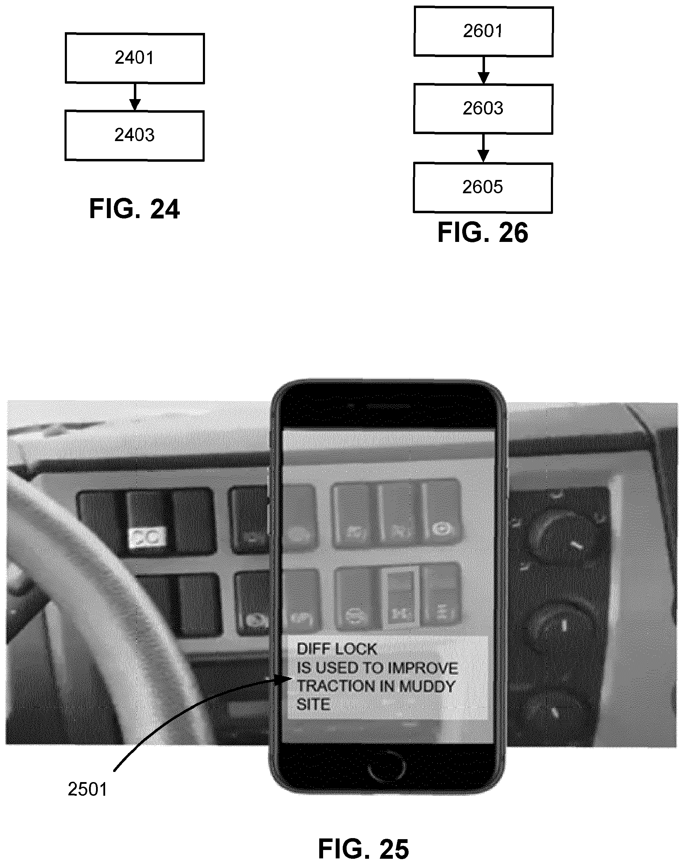

FIG. 24 illustrates an aspect where a description of a function of the target HMI is displayed before the augmented reality image having HMI information and the current status is displayed. Turning to FIG. 24, in block 2401, the controller 1002 initially displays a description of a function associated with the target HMI for a pre-determined period of time. FIG. 25 illustrates an example of a description 2501 of a function associated with the target HMI that may be displayed for the pre-determined period of time.

Returning to FIG. 24, in block 2403, the processor 1002, after the pre-determined period of time has expired; displays the augmented reality image.

In some aspects, the user may change the target HMI. For example, the user may press an HMI that is a button or turn an HMI that is a free wheel.

FIG. 26 illustrates a method when the target HMI is operated. Turning to FIG. 26, in block 2601, the processor 1002 transmits a status request to a controller 110 of the vehicle 104 to provide a status of the target HMI. In block 2603, the processor 1002 receives a status request response from the processor 110 with an updated current status of the target HMI. In block 2605, the processor 1002 displays the augmented reality image with the updated current status of the target HMI.

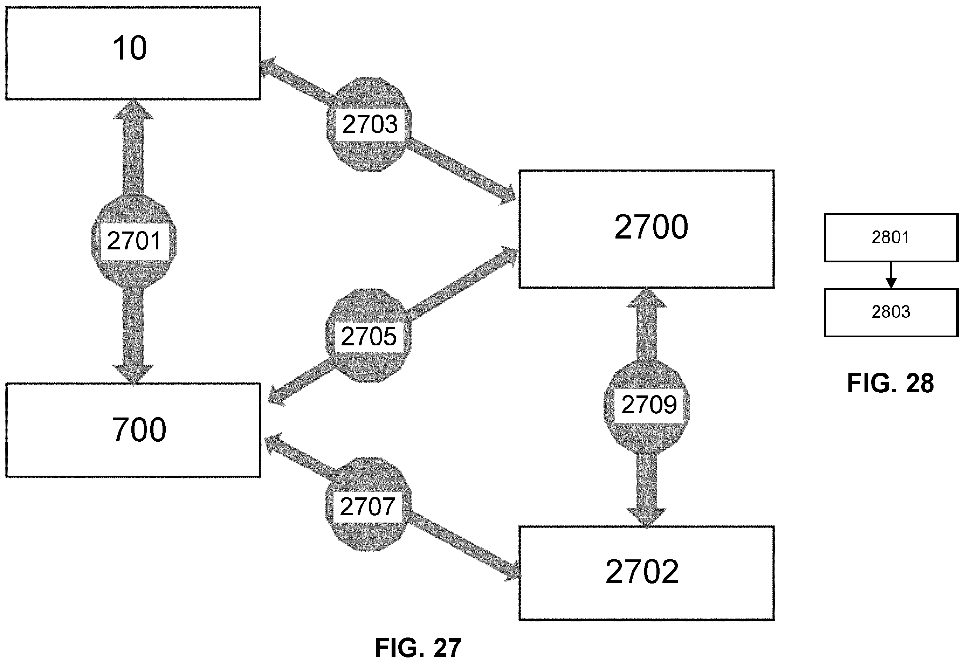

FIG. 27 illustrates an aspect where the vehicle manufacturer 2700 of the vehicle 100 and a fleet manager 2702 that manages the vehicle can provide aid to the vehicle driver 104 via the wireless device 700 paired with the vehicle 110. Turning to FIG. 27, in block 2701, the wireless device 700 obtains vehicle status for the augmented reality image. In block 2703, the vehicle 100 shares the vehicle status to the cloud 800 for the vehicle manufacturer 2700 to provide the best support. The vehicle manufacturer 2700 may have a support group and/or a back office that provides the support.

In block 2705, the vehicle manufacturer 2700 can support the vehicle driver 104 by pointing or ordering by voice recognition or text to the augmented reality vehicle driver manual.

In block 2707, the fleet manager 2702 can support the vehicle driver 104 by pointing or ordering by voice recognition or text to the augmented reality vehicle driver manual. The fleet manager 2702 is provided a mirror of the screen of the wireless device 700 (and/or the vehicle display 216).

In block 2709, the fleet manager 2702 obtains the HMI status and in some aspects, requests vehicle manufacturer support.

In some aspects, the fleet manager 2702 and/or the vehicle manufacturer 2700 may want to know which HMIs that vehicle drivers are wanting to obtain HMI information. For example, there can be trends of which HMIs are being selected for obtaining HMI information. FIG. 28 illustrates a method according to an aspect of tracking the HMI selections. Turning to FIG. 28, in block 2801, the processor 1002 tracks trends of which HMIs are being selected. In block 2803, the processor 1002 periodically transmits the trends to one of a vehicle manufacturer 2700 of the vehicle 104 and a fleet manager 2702 associated with the vehicle 100.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A method to determine a function and status of a human machine interface, HMI, of a vehicle, the method comprising:
receiving (1201), by a processor device (1002) of a computing system, a captured image including an HMI of the vehicle (104);
determining (1203) a target HMI of the vehicle (104) in the captured image;
obtaining (1205) HMI information about the target HMI;
determining (1207), from the vehicle (100), a current status of the target HMI;
generating (1209) an augmented reality image having the HMI information and the current status; and
sending (1211) the augmented reality image to a display device (700, 216).

2. The method of Claim 1, further comprising:
pairing (1109, 1301) a wireless device (700) to the vehicle (100);
determining (1303) a vehicle identification of the vehicle (100);
obtaining (1305) an augmented reality vehicle driver manual based on the vehicle identification determined; and
opening (1307) the augmented reality vehicle driver manual on the wireless device paired with the vehicle;
wherein obtaining HMI information of the vehicle comprises obtaining (1309) the HMI information from the augmented reality vehicle driver manual.

3. The method of Claim 2, wherein obtaining the augmented reality vehicle driver manual comprises:
transmitting (1401) a request towards a vehicle manufacturer support for the augmented reality vehicle driver manual; and
receiving (1403) the augmented reality vehicle driver manual responsive to the request.

4. The method of Claim 1, further comprising:
pairing (1109, 1501) a wireless device (700) to the vehicle;
authenticating (1503) the wireless device (700);
determining (1505) an identification of the vehicle;
determining (1507) if the wireless device (700) is associated with a user authorized to operate the vehicle (100); and
responsive to the wireless device being authorized, obtaining (1509) an augmented reality vehicle driver manual based on the identification of the vehicle and opening the augmented reality vehicle driver manual on the wireless device paired with the vehicle,
wherein obtaining HMI information of the vehicle comprises obtaining (1511) the HMI information from the augmented reality vehicle driver manual.

5. The method of any of Claims 1-4, wherein determining the target HMI of the vehicle in the captured image comprises determining (1601) which HMI of the vehicle was selected by the user.

6. The method of any of Claims 1-5, wherein determining the target HMI of the vehicle selected comprises determining (1701) an HMI pointed at or touched by the user.

7. The method of any of Claims 1-6, wherein determining the target HMI of the vehicle selected comprises:
displaying (1801), on the wireless device (700) paired with the vehicle, the captured image of a vehicle panel at which the wireless device is pointed;
obtaining (1803) an image of the HMI selected on the captured image of the vehicle panel on the wireless device or selected on the vehicle panel;
based on the selection, determining (1805) the target HMI.

8. The method of any of Claims 1-7, wherein determining the current status of the target HMI comprises:
transmitting (1901) a status request to a controller of the vehicle to provide a status of the target HMI; and
receiving (1903) a status request response from the controller with the current status of the target HMI.

9. The method of any of Claims 1-8, wherein determining the current status of the target HMI selected comprises:
responsive to the vehicle being off:
transmitting (2001) a command with an identification of the target HMI to the vehicle to turn on and provide the current status of the target HMI based on the identification of the target HMI; and
receiving (2003) a response having the current status of the target HMI.

10. The method of any of Claims 1-9, further comprising:
initially (2401) displaying a description of a function associated with the target HMI for a pre-determined period of time; and
after the pre-determined period of time has expired; displaying (2403) the augmented reality image.

11. The method of any of Claims 1-10 wherein sending the augmented reality image for display comprises sending the augmented reality image for displaying on a vehicle display (216).

12. The method of any of Claims 1-10, wherein sending the augmented reality image for display comprises sending the augmented reality image for displaying the augmented reality image on a display (710) of the wireless device (700).

13. The method of any of Claims 1-12, wherein sending the augmented reality image for display comprises sending the augmented reality image for displaying a video describing one or more vehicle functions associated with the target HMI.

14. The method of any of Claims 1-12, further comprising:
responsive to operating the target HMI:
transmitting (2601) a status request to a controller of the vehicle to provide a status of the target HMI;
receiving (2603) a status request response from the controller with an updated current status of the target HMI; and
displaying (2605) the augmented reality image with the updated current status of the target HMI.

15. The method of any of Claims 1-14, further comprising:
tracking (2801) trends of which HMIs are being selected; and
periodically transmitting (2803) the trends to one of a vehicle manufacturer of the vehicle and a fleet manager associated with the vehicle.

16. A vehicle comprising the processor device to perform the methods of claims 1-15.

17. A computer program comprising program code for performing, when executed by the processor device, the method of any of claims 1-15.

18. A non-transitory computer-readable storage medium comprising instructions, which when executed by the processor device, cause the processor device to perform the method of any of claims 1-15.

19. A computing system, comprising:
at least one computing device comprising a processor device configured to perform the method of any of claims 1-15.
